# EUROPEAN PATENT APPLICATION

(11) **EP 4 672 671 A1**
(43) Date of publication of application: **31.12.2025**
(21) Application number: 24185061.9
(22) Date of filing: 27.06.2024
(51) Int. Cl.: H04L 9/40, H04L 61/4511

(54) **A METHOD AND A COMMUNICATION SYSTEM FOR BLOCKING ACCESS TO A UNIFORM RESOURCE IDENTIFIER USING A DOMAIN NAME RESOLUTION SYSTEM**

(71) Applicant: Deutsche Telekom AG, 53113 Bonn (DE)
(72) Inventor: LEYMANN, Nicolai, 10435 Berlin (DE)
(74) Representative: Blumbach · Zinngrebe Patentanwälte PartG mbB

(57) **Abstract**

The present invention relates to a method and a communication system that implement a domain name resolution system using an extended blocking mechanism to block access to a URI queried by a user's computing device (20). The user's computing device (20) is configured to generate by executing an application program a domain name resolution query message including a domain name of a destination device and a path of an object stored on the destination device and to transmit it to a respective domain name resolution server device (40) on which the extended blocking mechanism is implemented. The domain name resolution server device (40) is configured to processes the domain name resolution query message by checking whether the domain name of a destination device or the path of an object stored on the destination device is blocked.

## Description

### Technical Field of the Invention

The present invention relates to a method and a communication system in particular for blocking a Uniform Resource Identifier (URI) using a domain name resolution system.

### Background of the Invention

It is known to use the Domain Name System (DNS) to resolve domain names, i.e. to translate domain names, which are human readable and easy to remember, into IP addresses needed for locating and identifying destination services and/or destination devices. The DNS implements a standardized protocol published by the Internet Engineering Task Force (IETF) for example in Request for Comments (RFC) 1035. In particular, DNS is a hierarchical and distributed database system in particular for computers and services using an IP-based computer network like the Internet. DNS defines the DNS protocol, which comprises a detailed specification of data structures used for communication and data communication rules for exchanging on a client-server basis DNS queries and DNS responses between communicating devices by using an end-to-end transport protocol like the User Datagram Protocol (UDP) or the Transmission Control Protocol (TCP).

In order to protect a user's end device against malware or botnets a blocking mechanism may implemented in DNS server programs. In case a domain name being queried by a user's end device belongs to a malicious destination device the called DNS server using the respective blocking mechanism dose not respond with an IP address but with an "NXDOMAIN" information to the user's end device indicting that the domain name being queried does not exists. This effectively results in blocking access to the domain name being queried.

However, up to now DNS queries only transmit the domain name of a URI. Therefore, the blocking mechanism implemented in a DNS server program only checks the domain name received in a DNS query. This mechanism leads to the drawback that if a domain name is blocked all content stored on the device with that domain name is not accessible. In this case, even valid content cannot be accessed.

Therefore, it is an object of the present invention to provide a method and a communication system in particular for blocking access to a URI, wherein the method and the communication system allow in a more sophisticated and flexible way blocking the access to destination devices or destination services.

### Summary of the Invention

It is a preferable aspect of the present invention to provide a method and a communication system that implement a domain name resolution system using an extended blocking mechanism to block access to a URI queried by a user's end device, also called a user's computing device. The extended blocking mechanism processes domain name resolution queries including not only a domain name of a destination device but further information such as the path of an object stored on the destination device. Such a domain name resolution query is generated by an application program running on a user's computing device and transmitted from the user's computing device to a respective domain name resolution server device on which the blocking mechanism is implemented. Preferably, the domain name resolution system is configured to translate a domain name being queried in an IP address of the respective destination device.

The above-mentioned technical problem is solved by the features of independent claims 1 and 8, respectively. Further preferred embodiments are set forth in the dependent claims.

According to a first aspect a method in particular for blocking access to a Uniform Resource Identifier, URI, using a domain name resolution system, is provided, wherein the method comprises the following steps:
a) Executing, by a user's computing device , an application program stored on the user's computing device, wherein the application program implements a domain name resolution client program, wherein the domain name resolution client program is configured to generate a domain name resolution query message including a domain name of a destination device and a path of an object stored on the destination device;
b) Providing by the application program a URI, which comprises a domain name of a destination device and a path of a desired object stored on the destination device;
c) Generating by the domain name resolution client program on the basis of the URI provided at step b) a domain name resolution query message including the domain name of the destination device and the path of the desired object stored on the destination device;
d) Transmitting the domain name resolution query message from the user's computing device to a domain name resolution server device, the domain name resolution server device being responsible for the domain name included in the domain name resolution query message;
e) Checking, by the domain name resolution server device, whether the domain name of the destination device and/or the path of the desired object, which are included in the domain name resolution query message transmitted at step d), is blocked;
f) if step e) results in the domain name of the destination device is blocked or the path of the desired object is blocked, then
   - generating, by the domain name resolution server device, a domain name resolution response message indicating that the URI being queried is blocked, and
   - transmitting, by the domain name resolution server device, the domain name resolution response message to the user's computing device.

In particular, the domain name resolution response message can be a standardized DNS response message including the known information "NXDOMAIN".

With this method it is guaranteed, that if only the path of the desired object stored on the destination device is blocked the remaining valid objects stored on the destination device remain accessible under the domain name.

Preferably, the application program is a web browser, but it can be of any other type.

It is to be noted that the feature "a domain name resolution query message including a domain name of a destination device and a path of an object stored on the destination device" means that at least one of the domain name of a destination device and the path of an object stored on the destination device is preferably in a human readable form and/or a hash value.

It is further to be noted, that the domain name resolution query message can be considered as a modified Domain Name System (DNS) query having an extended message format to include both a domain name of a destination device and a path of an object stored on the destination device. In the following the domain name resolution query message can be referred to as an extended DNS query message.

Preferably, step b) comprises the step of entering the URI by the user on the user's computing device). It is to be noted that a URI can be used, which is defined for example in RFC 3986.

In order to protect privacy and security of the user, the method may further comprise the step of encrypting, by the user's computing device, the domain name resolution query message generated at step c) and transmitting at step d) the encrypted domain name resolution query message.

Preferably, the step of encrypting the domain name resolution query message comprises the steps of
executing, by the user's computing device, an application layer client program, which implements an extended Domain Name System (DNS), over the Hypertext Transfer Protocol Secure protocol (DoH), wherein the application layer client program is configured to generate a secure transport message, which includes the encrypted domain name resolution query message including the domain name of the destination device and the path of the object stored on the destination device and to transmit at step d) the secure transport message.

With other words, the invention may be based on a DoH protocol, which is modified to define an extended secure message format. The so called extended DoH protocol is further configured to control the transport of an encrypted domain name resolution query including a domain name of a destination device and a path of an object stored on the destination device, wherein the encrypted domain name resolution query is transmitted in an extended secure message. It is noted, that the DoH protocol is a standardized protocol published by the IETF in RFC 8484.

Alternatively, a modified DNS over Transport Layer Security protocol (DoT) can be implemented which defines an extended secure message format and the encryption and transmission of DNS queries over the Transport Layer Security protocol. DoT is a standardized protocol published by IEFT (Internet Engineering Task Force) in RFC 7858.

Preferably, a black list is stored on the domain name resolution server device, wherein the black list includes blocking information on a domain name of at least one device or on at least one path of an object stored on said at least one device, wherein,
at step e), the domain name of the destination device and the path of the desired object are checked by using the black list.

According to second aspect, a communication system is provided, wherein the communication system comprises the following features:
a communication network,
at least one user's computing device and at least one domain name resolution server device, wherein
the at least one user's computing device comprises
a data processing unit,
a memory) configured to store an application program including a domain name resolution client program, wherein
the data processing unit is configured to cause, when executing the application program and the domain name resolution client program, the user's computing device,
to forward a Uniform Resource Locator, URI, provided by the application program to the domain name resolution client program, wherein which the URI includes a domain name of a destination device and a path of a desired object stored on the destination device,
to generate on the basis of the forwarded URI a domain name resolution query message including the domain name of the destination device and the path of the desired object stored on the destination device, and wherein
the data processing unit is configured to further cause the user's computing device to transmit the domain name resolution query message via the communication network to the at least one domain name resolution server device, the domain name resolution server device being responsible for the domain name included in the domain name resolution query message, and wherein
the domain name resolution server device is configured to receive the domain name resolution query message including the domain name of the destination device and the path of the desired object stored on the destination device, wherein the domain name resolution server device comprises
a data processing unit and
a memory configured to store a software, which comprises a domain name resolution server program, wherein
the data processing unit of the domain name resolution server device is configured to cause the domain name resolution server device, when executing the software,
   a) to check, whether the domain name of the destination device and/or the path of the desired object, which are included in the domain name resolution query message transmitted by the at least one user's computing device is blocked, and
   b) if step a) results in the domain name of the destination device is blocked or the path of the desired object is blocked, to generate a domain name resolution response message including an information that the URI being queried by the user's computing device (20) is blocked, and to transmit the domain name resolution response message to the user's computing device (20).

Preferably, the application program is a web browser, but it can be of any other type.

Preferably, the URI, which comprises the domain name of the destination device and the path of the desired object stored on the destination device, is entered by the user via an input device into the user's computing device.

In order to protect privacy and security of the user, the data processing unit of the user's computing device is preferably configured to cause the user's computing device to encrypt the domain name resolution query message and to transmit the encrypted domain name query message to the at least one domain name resolution server device, wherein the at least one domain name resolution server device is configured to decrypt the encrypted domain name resolution query message.

In a preferred embodiment, an application layer client program, which implements an extended Domain Name System (DNS) over the Hypertext Transfer Protocol Secure protocol (DoH) is stored on the memory of the user's computing device. The data processing unit of the user's computing device is preferably configured to cause the user's computing device, when executing the application layer client program, to generate a secure transport message, which includes the encrypted domain name resolution query message including the domain name of the destination device and the path of the object stored on the destination device and to transmit the secure transport message to the at least one domain name resolution server device, wherein an application layer server program is stored on the memory of the at least one domain name resolution server device, the application layer server program implementing an extended Domain Name System, DNS, over the Hypertext Transfer Protocol Secure protocol, DoH, wherein the data processing unit of the at least one domain name resolution server device is configured to cause, when executing the application layer server program, the domain name resolution server device to extract the encrypted domain name resolution query message from the secure transmission transport message and to decrypt the encrypted domain name resolution query message.

With other words, the invention may use an extended DoH protocol modified to control extraction of an encrypted domain name resolution query message from a secure transmission transport message and decryption of the encrypted domain name resolution query message for further processing.

Preferably, a black list is stored in a memory of the domain name resolution server device, wherein the black list includes blocking information on a domain name of at least one destination device or on at least one path of an object stored on said at least one destination device, wherein
the data processing unit of the at least one domain name resolution server device is configured to cause the at least one domain name resolution server device, when executing the software, to check, whether the domain name of the destination device and the path of the desired object, which are included in the domain name resolution query message transmitted by the at least one user's computing device, by using the black list.

Preferably, the communication network is an IP-based communication network, for example the Internet.

In order to inform the user's computing device that the access to the URI being queried is blocked, i.e. not accessible, the data processing unit of the domain name resolution server device is configured to cause, when executing the software stored on the memory, the domain name resolution server device
to generate a domain name resolution response message including an information that the URI being queried by the user's computing device is blocked, and to transmit the domain name resolution response message to the user's computing device.

Preferably, the at least one user's computing device and the at least one domain name resolution server device each implement an end-to-end transport protocol like the User Datagram Protocol (UDP) or the Transmission Control Protocol (TCP) to exchange domain name resolution query messages and domain name resolution response messages.

### Detailed Description of the Invention

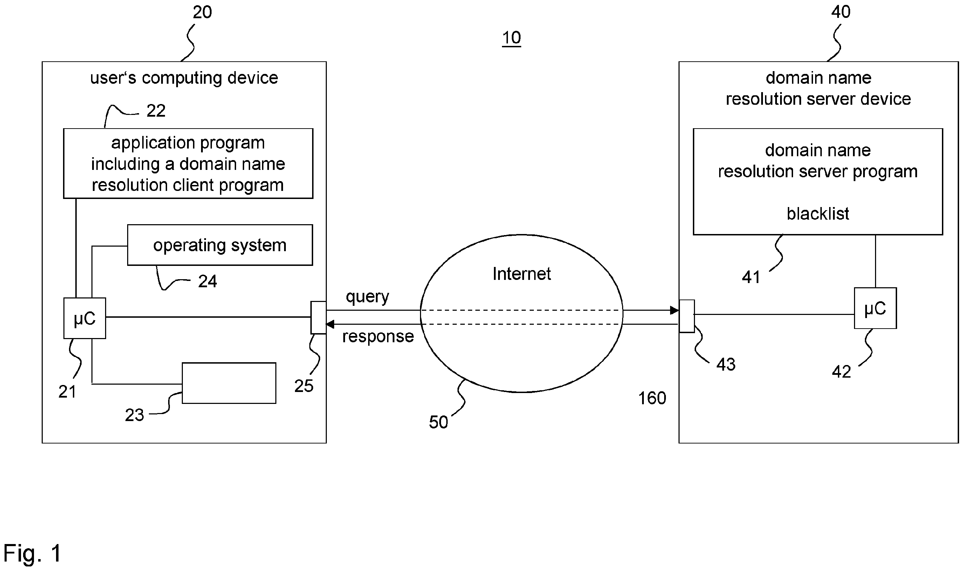

Figure 1 depicts an exemplary embodiment of a communication system 10, which comprises a communication network 30, which is preferably an IP-based computer network like the Internet. Furthermore, the communication system 10 comprises at least one user's computing device 20 and at least one domain name resolution server device 40, wherein the at least one domain name resolution server device 40 may be part of an domain name resolution system, which is preferably a hierarchical and distributed database system and configured to support resolving, i.e. translating domain names being queried to IP addresses and blocking access to malicious URI. In practice, the communication system 10 comprises a plurality of user computing devices and domain name resolution server devices.

The domain name resolution system is configured to exchange on a client-server basis domain name resolution query messages, wherein each query message includes a domain name of a destination device and additional information like a path of a desired object stored on the destination device, and response messages between communicating devices, for example between the user's computing device 20 and the domain name resolution server device 40, using an end-to-end transport protocol like the User Datagram Protocol (UDP) or the Transmission Control Protocol (TCP). In particular, the domain name resolution system supports blocking the access to a malicious URI by evaluating the domain name and the additional information included in a domain name resolution query message.

In the preferred embodiment, the domain name resolution system implemented in the communication system 10 can be based on the Domain Name System (DNS), which implements a standardized protocol published by the Internet Engineering Task Force (IETF) for example in Request for Comments (RFC) 1035. In this case, the DNS is modified in such that
- it defines a modified DNS query message that includes the domain name of a destination device and an additional information like a path of an object stored on the destination device and that
- it supports blocking the access to a malicious URI by evaluating the domain name and the additional information included in the modified DNS query message.

The user's computing device 20 can be for example any end device such as a notebook, a smartphone, or a personal computer and the like. The user's computing device 20 comprises a communication interface 25 which is configured to support in particular an end-to-end transport protocol like the connectionless User Datagram Protocol (UDP) or the connection-oriented Transmission Control Protocol (TCP) to transmit and receive data packets via the exemplary IP-based communication network 30. In particular, the communication interface 25 includes hardware and software components and implements the Internet protocol.

Furthermore, the user' computing device 20 comprises a memory 22, which stores at least an application program. The application program comprises, for example as a subroutine, a domain name resolution client program, wherein the domain name resolution client program is configured to generate, if started, a domain name resolution query message, which includes a domain name of a destination device and as an additional information for example a path of an object stored on the destination device, which are included in a URI. The application program may be for example a web browser. With other words: domain name resolution client program is implemented by the application program and not in an operating system, In order to control and/or monitor the user's computing device 20 an operating system and/or firmware can be stored in memory 22 or a separate memory 24 as shown in figure 1. By shifting the domain name resolution client program in the application program a domain name resolution query message is directly generated and transmitted by the application program. In this case, the application program has access to a complete URI information, which may be entered by the user via an input device 23 into the computing device 20 and the exemplary web browser, respectively.

Furthermore, the user's computing device 20 comprises a data processing unit 21, which is preferably connected to the memories 22 and 22, the input device 23 and the communication interface 25. The data processing unit 21 can be realized as a micro controller or a microprocessor. The data processing unit 21 is configured to cause, when executing the application program and the included domain name resolution client program, the user's computing device 20,
to forward a Uniform Resource Locator, URI, provided by the application program to the domain name resolution client program, wherein which the URI includes a domain name of a destination device and a path of a desired object stored on the destination device,
to generate on the basis of the forwarded URI a domain name resolution query message including the domain name of the destination device and the path of the desired object stored on the destination device, and wherein
the data processing unit 21 is configured to further cause the user's computing device 20
to transmit the domain name resolution query message for example in a UDP data packet via the communication network 30 for example to the domain name resolution server device 40 by using the UDP protocol. In the preferred embodiment, the domain name resolution server device 40 is being responsible for the resolution of the domain name, which is included in the transmitted domain name resolution query message. In order to transmit the domain name resolution query message the user's computing device 20 has to know the IP address of the domain name resolution server device 40.

The domain name resolution server device 40 comprises a communication interface 43, which is configured to support in particular an end-to-end transport protocol like the connectionless User Datagram Protocol (UDP) or the connection-oriented Transmission Control Protocol (TCP) to transmit and receive data packets via the exemplary IP-based communication network 30. In particular, the communication interface 43 includes hardware and software components and implements the Internet protocol.

In practice, the domain name resolution server device 40 manages a plurality of predetermined domain names of different possible destination devices and is configured to resolve, i.e. translate each of the domain name in its respective IP address, if access to the respective domain name is not blocked, as illustrated later.

The domain name resolution server device 40 comprises a memory 41, which stores a software, which in particular comprises a domain name resolution server program and a program configured to check whether a domain name or an additional information like a path of an object both included in a domain name resolution query message is blocked and thus access to the respective URI being queried is blocked. Preferably, an operating system or a firmware for controlling and/or monitoring the domain name resolution server device 40 can be stored in the memory 41 or in a separate memory. This program can be implemented in the domain name resolution server program or as a separate program. One task of the domain name resolution server program is to resolve or translate a domain name received in domain name resolution query message in its respective IP address. In this case the domain name resolution server program works preferably as a standard DNS server program.

Furthermore, the domain name resolution server device 40 comprises a data processing unit 42 connected to the memory 41 and the communication interface 43. The data processing unit 42 can be implemented as a micro controller or a microprocessor. The data processing unit 42 is configured to cause the domain name resolution server device 40, when executing the software stored in memory 41,
a) to check, whether the domain name of the destination device and/or the path of the desired object, which are included in the domain name resolution query message transmitted by the at least one user's computing device 20 is blocked, and
b) to block access to the URI being queried by the user's computing device 20, if step a) results in the domain name of the destination device is blocked or the path of the desired object is blocked. It is to be noted, that a destination device can be a computing device or system storing destination services or objects like documents, websites, music or videos, which can be downloaded by the user's computing device 20, if the IP address of the destination devices (not shown) is known to the user's computing device 20. The data processing unit 42 is preferably configured to further cause, when executing the software stored on the memory 41, the domain name resolution server device 40 to generate a domain name resolution response message including an information that the URI being queried by the user's computing device 20 is blocked, and to transmit the domain name resolution response message to the user's computing device 20. The information can be the known term "NXDOMAIN". In this case a standard DNS response message including the information "NXDOMAIN" can be generated and transmitted by the domain name resolution server device 40.

Preferably, a black list is stored in the memory 41 of the domain name resolution server device 40, wherein the black list includes blocking information on a domain name of at least one destination device or on at least one path of an object stored on said at least one destination device. In this case the data processing unit 42 is configured to cause the domain name resolution server device 40, when executing the software, to check, whether the domain name of the destination device and the path of the desired object, which are included in the domain name resolution query message transmitted by the at user's computing device 20, by using the black list. With other words: The domain name resolution server devices 40 is configured to check the domain name of the destination device and the path of the desired object, which are included in the domain name resolution query message against the records stored in the black list.

Now the operation of the exemplary communication system 10 as depicted in figure 1 is explained in more detail with respect to an exemplary scenario.

It is assumed that the IP address of the domain name resolution server device 40 is stored as default IP address on the user's computing device 20 and that the domain name being queried in this scenario is managed by the domain name resolution server device 40, i.e. for example stored on its cache. This means that the user's computing device 20 is transmitting a domain name resolution query message firstly to the domain name resolution server device 40 to try to get an IP address of the domain name of a destination device. However, if the default server device 40 is not responsible for the domain name being queried by the user's computing device 20, routing procedures to find the domain name resolution server device, which is responsible for resolving the domain name queried can be implemented. Such routing procedures are known to the skilled person and described with respect to the DNS for example by James Kurose et al. in the reference book Computernetzwerke, Der Top-Down-Ansatz, 6, aktualisierte Auflage, 2014, Seiten 156-162.

It is noted, that the user's computing device 20 can be configured to transmit a domain name resolution query message generated by the application program including a domain name of a destination device and a path of an object stored on the destination device not encrypted via an unsecured connection using for example the UDP protocol and the IP protocol to the domain name resolution server device 40 and receive via the unsecured connection an unsecured domain name resolution response message from the domain name resolution server device 40, which also uses the UDP protocol and the IP protocol.

In the following exemplary scenario, it is assumed that the data processing unit 21 is configured to cause the user's computing device 20 to encrypt the domain name resolution query message and to transmit the encrypted domain name query message to the at least one domain name resolution server device 40 for example using the UDP or TCP protocol. The domain name resolution server device 40 is configured to decrypt an encrypted domain name resolution query message received from the user's computing device 40. It is to be noted that encryption and decryption can be performed for example by using DoT or DoH.

Therefore, an application layer client program is stored on the memory 22 of the user's computing device 20, wherein the application layer client program implements an extended Domain Name System, DNS, over the Hypertext Transfer Protocol Secure protocol, DoH. In this exemplary case, the data processing unit 21 of the user's computing device 20 is configured to cause, when executing the application layer client program, the user's computing device 20 to generate a secure transport message, which includes the encrypted domain name resolution query message including the domain name of the destination device and the path of the object stored on the destination device and to transmit the secure transport message to the at least one domain name resolution server device. In addition, an application layer server program is stored on the memory 41 of the at least one domain name resolution server device 40, wherein the application layer server program implements an extended Domain Name System, DNS, over the Hypertext Transfer Protocol Secure protocol, DoH. In this exemplary case the data processing unit 42 of the domain name resolution server device 40 is configured to cause, when executing the application layer server program, the domain name resolution server device 40 to extract the encrypted domain name resolution query message from the secure transmission transport message and to decrypt the encrypted domain name resolution query message.

As already mentioned, the DoH protocol is a standardized protocol published by the IETF in RFC 8484.

The DoH protocol defines a DoH template of the following structure: https://dnsserver.example.net/dns-query{?dns} In this template the section "dnsserver.example.net" defines a DNS server device to which a DNS query is directed. In the exemplary scenario, this section includes the domain name of the domain name resolution server device 40. The section "DNS-query" indicates that the template includes a DNS query, wherein the parameter ?dns represents a domain name being queried.

The extended DoH protocol now defines an extended template, herein called a secure transport message, of the following structure:
https://dnsserver.example.net/dns-query{?dns, path_from_URI}

In this case the dns-query comprises a first parameter representing a domain name domain name of a destination device and a second parameter representing a path of an object stored on the destination device.

Now, it is assumed, that the user has started the application program, in the exemplary scenario a web browser stored in memory 22 and enters via the input device 23 the following Uniform Resource Identifier (URI):
http s: // /www.example.com/content/download.exe

The URI includes a domain name "www.example.com" of a destination device and a path "content/download.exe of a desired object stored on the destination device.

Now, the data processing unit 21 starts the web browser, which implements also the domain name resolution client program. The data processing unit 21 causes by executing the web browser the user's computing device 20 to forward the URI entered by the user to the domain name resolution client program, which generates on the basis of the forwarded URI a domain name resolution query message including the domain name www.example.com of the destination device and the path "content/download.exe" of the desired object stored on the destination device.

The data processing unit 21 is further configured to cause the user's computing device 20, when executing the application layer client program, to encrypt the domain name resolution query message "www.example.com, content/download.exe" by generating the secure transport message https://dnsserver.example.net/dns-query{?www.example.com, content/download.exe}.

Next the data processing unit 21 is configured to cause the user's computing device 20 to encapsulate the secure transport message in a UDP data packet and to transmit the UDP packet for example in an IP packet and this the encrypted the domain name resolution query message via the communication interface 25 and the communication network 30 to the domain name resolution server device 40. The IP packet uses the IP address of the domain name resolution server device 40 as the destination address and the IP address of the user's computing device as the source address.

The domain name resolution server device 40 is configured to receive the encrypted domain name resolution query message included in the secure transport message.

In a common manner the data processing unit 42 is configured to extract the secure transport message from the UDP packet. Next, the data processing unit 42 is configured to cause, when executing the application layer server program, the domain name resolution server device 40 to extract the encrypted domain name resolution query message from the secure transmission transport message and to decrypt the encrypted domain name resolution query message.

Preferably, the black list stored in the memory 41 is used to perform the checking step. In the present case, the path "content/download.exe" but not the domain name www.example.com is recorded in the black list as malicious.

As a result, the data processing unit 42 now causes the domain name resolution server device 40, when executing the domain name resolution server program, which implements in particular a blocking functionality,
a) to check using the black list, whether the domain name of the destination device and/or the path of the desired object, which are included in the decrypted domain name resolution query message transmitted by the at least one user's computing device 20 is blocked. Since the path is listed in the black list the access to the URI being queried by the user's computing device 20 is blocked. This means that the domain name resolution server device 40 does not send the IP-address associated with the domain name "www.example.com" being queried to the user's computing device 20.

Preferably, the data processing unit 42 of the domain name resolution server device 40 is configured to cause, when executing the software and in particular the domain name resolution server program the domain name resolution server device 40 to generate a domain name resolution response message including an information that the URI being queried by the user's computing device 20 is blocked, and to transmit the domain name resolution response message to the user's computing device 20. For example a "NXDOMAIN" information can be sent to the user's computing device.

Preferably, the data processing unit 42 of the domain name resolution server device 40 is configured to cause, when executing the software and in particular the domain name resolution server program to encrypt the domain name resolution response message and transmit it via the communication network 30 to the user's computing device 20.

## Claims

1. A method in particular for blocking access to a Uniform Resource Identifier, URI, wherein the method comprises the following steps:
a) Executing, by a user's computing device (20), an application program stored on the user's computing device (20), wherein the application program implements a domain name resolution client program, wherein the domain name resolution client program is configured to generate a domain name resolution query message including a domain name of a destination device and a path of an object stored on the destination device;
b) Providing by the application program a URI, which comprises a domain name of a destination device and a path of a desired object stored on the destination device;
c) Generating by the domain name resolution client program on the basis of the URI provided at step b) a domain name resolution query message including the domain name of the destination device and the path of the desired object stored on the destination device;
d) Transmitting the domain name resolution query message from the user's computing device (20) to a domain name resolution server device (40), the domain name resolution server device (40) being responsible for the domain name included in the domain name resolution query message;
e) Checking, by the domain name resolution server device (40), whether the domain name of the destination device and/or the path of the desired object, which are included in the domain name resolution query message transmitted at step d), is blocked;
f) if step e) results in the domain name of the destination device is blocked or the path of the desired object is blocked, then
- generating, by the domain name resolution server device (40), a domain name resolution response message indicating that the URI being queried is blocked, and
- transmitting, by the domain name resolution server device (40), the domain name resolution response message to the user's computing device (20).

2. The method of claim 1, wherein
the application program is a web browser.

3. The method of claim 1 or 2, wherein
step b) comprises the step of entering the URI by the user on the user's computing device (20).

4. The method of any one of the preceding claims, further comprising
the step of encrypting, by the user's computing device, the domain name resolution query message generated at step c) and transmitting at step d) the encrypted domain name resolution query message.

5. The method of claim 4, further comprising
the step of executing, by the user's computing device, an application layer client program, which implements an extended Domain Name System, DNS, over the Hypertext Transfer Protocol Secure protocol, wherein the application layer client program is configured to generate a secure transport message, which includes the encrypted domain name resolution query message including the domain name of the destination device and the path of the object stored on the destination device and to transmit at step d) the secure transport message.

6. The method of any one of the preceding claims, wherein
a black list is stored on the domain name resolution server device (40), the black list including blocking information on a domain name of at least one device or on at least one path of an object stored on said at least one device, wherein,
at step e), the domain name of the destination device and the path of the desired object are checked by using the black list.

7. A communication system (10) comprising:
a communication network (30),
at least one user's computing device (20 and at least one domain name resolution server device (40), wherein
the at least one user's computing device (20) comprises a data processing unit (21),
a memory (22) configured to store an application program including a domain name resolution client program, wherein
the data processing unit (21) is configured to cause, when executing the application program and the included domain name resolution client program,
the user's computing device (20),
to forward a Uniform Resource Locator, URI, provided by the application program to the domain name resolution client program, wherein which the URI includes a domain name of a destination device and a path of a desired object stored on the destination device,
to generate on the basis of the forwarded URI a domain name resolution query message including the domain name of the destination device and the path of the desired object stored on the destination device, and wherein
the data processing unit (21) is configured to further cause the user's computing device (20)
to transmit the domain name resolution query message via the communication network (30) to the at least one domain name resolution server device (40), the domain name resolution server device (40) being responsible for the domain name included in the domain name resolution query message, and wherein
the domain name resolution server device (40) is configured to receive the domain name resolution query message including the domain name of the destination device and the path of the desired object stored on the destination device, wherein
the domain name resolution server device (40) comprises a data processing unit (42) and
a memory (41) configured to store a software, which comprises a domain name resolution server program, wherein
the data processing unit (42) of the domain name resolution server device (40) is configured to cause the domain name resolution server device (40), when executing the software,
a) to check, whether the domain name of the destination device and/or the path of the desired object, which are included in the domain name resolution query message transmitted by the at least one user's computing device 20 is blocked, and
b) if step a) results in the domain name of the destination device is blocked or the path of the desired object is blocked,
to generate a domain name resolution response message including an information that the URI being queried by the user's computing device (20) is blocked, and
to transmit the domain name resolution response message to the user's computing device (20).

8. The communication system of claim 7, wherein
the application program is a web browser.

9. The communication system of claim 7 or 8, wherein
the URI, which comprises the domain name of the destination device and the path of the desired object stored on the destination device, is entered by the user on the user's computing device (20).

10. The communication system of any one of the claims 7 to 9, wherein
the data processing unit (21) of the user's computing device (20) is configured to cause the user's computing device (20) to encrypt the domain name resolution query message and to transmit the encrypted domain name query message to the at least one domain name resolution server device (40), wherein the at least one domain name resolution server device (40) is configured to decrypt the encrypted domain name resolution query message.

11. The communication system of claim 10, wherein
an application layer client program is stored on the memory (22) of the user's computing device (20), the application layer client program implementing an extended Domain Name System, DNS, over the Hypertext Transfer Protocol Secure protocol, DoH, wherein
the data processing unit (21) of the user's computing device (20) is configured to cause, when executing the application layer client program, the user's computing device (20) to generate a secure transport message, which includes the encrypted domain name resolution query message including the domain name of the destination device and the path of the object stored on the destination device and to transmit the secure transport message to the at least one domain name resolution server device, wherein
an application layer server program is stored on the memory (41) of the at least one domain name resolution server device (40), the application layer server program implementing an extended Domain Name System, DNS, over the Hypertext Transfer Protocol Secure protocol, DoH, wherein
the data processing unit (42) of the at least one domain name resolution server device (40) is configured to cause, when executing the application layer server program, the domain name resolution server device (40) to extract the encrypted domain name resolution query message from the secure transmission transport message and to decrypt the encrypted domain name resolution query message.

12. The communication system of any one of the claims 7 to 11, wherein
a black list is stored in the memory (41) of the domain name resolution server device (40), the black list including blocking information on a domain name of at least one destination device or on at least one path of an object stored on said at least one destination device, wherein
the data processing unit (42) of the at least one domain name resolution server device (40) is configured to cause the at least one domain name resolution server device (40), when executing the software, to check, whether the domain name of the destination device and the path of the desired object, which are included in the domain name resolution query message transmitted by the at least one user's computing device (20), by using the black list.

13. The communication system of any one of the claims 7 to 12,
wherein the communication network (30) is an IP-based communication network.
